# DEMANDE DE BREVET EUROPEEN

(11) **EP 2 608 590 A1**
(43) Date de publication de la demande: **26.06.2013**
(21) Numéro de dépôt: 12197575.9
(22) Date de dépôt: 17.12.2012
(51) Int. Cl.: H04W 12/08, H04L 29/06

(54) **Auto-configuration d'un équipement pour la connexion à un réseau sans fil sécurisé**

(30) Priorité: 20.12.2011 FR 1162102
(71) Demandeur: Bouygues Telecom, 75008 Paris (FR)
(72) Inventeur: Dauchy, Jérôme, 78470 Saint Rémy Lès Chevreuse (FR)
(74) Mandataire: Regimbeau

(57) **Abrégé**

La présente invention concerne un procédé de configuration d'un équipement (1 a) pour la connexion à un réseau sans fil principal sécurisé (LAN#1), un boitier d'accès à Internet (2) comprenant des moyens de communication sans fil (20) avec l'équipement (1 a) au moins et des moyens de routage (21), caractérisé en ce que lesdits moyens de communication sans fil et de routage (20, 21) sont aptes à établir le réseau sans fil principal (LAN#1) et un réseau sans fil alternatif (LAN#2), le boitier (2) étant configuré pour, lorsqu'il est connecté à l'Internet (10) et lorsque l'équipement (1a) est connecté au boitier (2) via le réseau alternatif (LAN#2), n'autoriser que le trafic entrant/sortant nécessaire au téléchargement sur l'équipement (1 a) d'un logiciel de configuration,
le procédé comprenant les étapes de :
- Activation du réseau sans fil alternatif (LAN#2),
- Connexion de l'équipement (1 a) au boitier (2) via ledit réseau sans fil alternatif (LAN#2),
- Téléchargement dudit logiciel de configuration et installation sur l'équipement (1 a),
- Configuration de l'équipement (1 a) pour la connexion au réseau sans fil principal (LAN#1) par le logiciel de configuration.

## Description

### DOMAINE TECHNIQUE GENERAL

La présente invention concerne le domaine des boitiers d'accès à Internet.

Plus précisément, elle concerne un procédé d'auto-configuration pour la connexion à un réseau sans fil sécurisé.

### ETAT DE L'ART

L'accès à l'Internet est de nos jours couramment obtenu grâce à des équipements de type IAD (« Integrated Access Device ») proposés par les fournisseurs d'accès à Internet et communément appelés « box ».

Ces boitiers d'accès à Internet permettent de connecter un client du fournisseur d'accès à son réseau opérateur qui fait l'interface avec le réseau Internet. Les boitiers d'accès à Internet sont en cela des équipements de terminaison de réseau, ou « consumer edges » (CE). La connexion physique au réseau opérateur se fait le plus souvent viaxDSL, câble, ou fibre optique.

L'installation d'un boitier d'accès à Internet ne prend le plus souvent que quelques minutes, et une fois que ce celui-ci a établi une connexion au réseau du fournisseur (par exemple via une prise téléphonique murale dans le cas d'une ligne ADSL), l'utilisateur n'a plus qu'à établir une connexion entre son ordinateur (ou tout autre équipement qu'il veut connecter à Internet) et le boitier.

Pour ce faire, une première méthode est d'utiliser un câblage physique, par exemple via un connecteur RJ45 (« Ethernet »). Alternativement, l'utilisation d'un réseau sans fil, en particulier Wi-Fi, est de plus en plus répandue. Dans ce dernier cas, le boitier d'accès à Internet embarque des moyens d'émission/réception sans fil, et génère un réseau sans fil auquel un ou plusieurs équipements vont se connecter.

L'inconvénient d'un réseau sans fil est la possibilité que des tiers à proximité du boîtier détectent et utilisent le réseau sans l'autorisation du propriétaire du boitier. C'est pourquoi les réseaux sans fil sont le plus souvent sécurisés : la saisie d'un mot de passe est nécessaire pour établir la connexion, lequel mot de passe est généralement soit automatiquement généré par le boitier d'accès à Internet lors de la première connexion, soit préconfiguré.

Pour contrer les risques de pirater le réseau par la force brute (en testant toutes les combinaisons), la longueur des mots de passe (ou « clés ») n'a de cesse de s'allonger. A titre d'exemple le protocole WPA2-PSK (Wi-Fi Protected Access 2 - Pre-Shared Key) utilise à présent des clés de 256 bits, c'est-à-dire des séquences de 64 caractères hexadécimaux.

Le problème qui apparait est la difficulté pour l'utilisateur de saisir une telle clé sans faire d'erreur (Un exemple de clé 256 bits est 44656D616E646520646520627265766574206465204D61747468696575). Cette clé est en effet le plus souvent fournie à l'utilisateur en étant pour ce faire inscrite sur un papier ou un autocollant présent dans l'emballage dans lequel le boitier est livré à l'utilisateur.

Des alternatives à la saisie manuelle ont été proposées, mais elles s'avèrent toujours fastidieuses, et peuvent présenter des problèmes de sécurité et de compatibilité avec tous les équipements. Une première possibilité assez simple est de disposer d'un équipement déjà connecté au réseau sans fil, sur lequel la clé a déjà été saisie : il suffit par exemple de la copier sur une clé USB, de la transférer par ce moyen sur le nouvel équipement qui souhaite se connecter, et de la saisir par copier-coller. D'autres mécanismes de connexion tels qu'une liaison Bluetooth ad-hoc entre les deux équipements sont possibles. Ces types de techniques n'empêchent pas que la saisie manuelle reste obligatoire pour la connexion du premier équipement. De plus elles présentent des failles de sécurité.

Une solution plus prometteuse est offerte par le protocole WPS (Wi-Fi Protected Setup). Il est ainsi possible moyennant quelques manipulations comme la saisie d'un code PIN de quelques digits de permettre « l'association » du boitier d'accès à Internet et de l'équipement à connecter, la clé Wi-Fi étant alors transférée depuis le boitier de façon cryptée à un client WPS installé sur l'équipement à connecter. Alternativement, l'appui simultané sur un bouton de l'équipement et un bouton du boitier peut déclencher l'association.

Bien que les manipulations à faire soient parfois complexes pour un néophyte (accès au portail d'administration du boitier d'accès à Internet), cette technique apporte satisfaction, sous réserve que le boitier d'accès à Internet supporte le protocole WPS et surtout qu'un client WPS adapté soit installé sur l'équipement à connecter. Ces client sont généralement disponibles en ligne, et peuvent être récupérés par téléchargement.

Toutefois, dans notre cas, l'équipement a besoin de la clé Wi-Fi pour se connecter à Internet et pouvoir télécharger le client WPS, ce qui est contradictoire avec le but recherché.

Il serait par conséquent souhaitable de disposer d'une nouvelle façon de transférer une clé de sécurité à un équipement qui désire se connecter à un réseau sans fil sécurisé, qui soit à la fois simple pour l'utilisateur et parfaitement sécurisée.

### PRESENTATION DE L'INVENTION

La présente invention se rapporte ainsi à un procédé de configuration d'un équipement pour la connexion à un réseau sans fil principal sécurisé, un boitier d'accès à Internet comprenant des moyens de communication sans fil avec l'équipement et des moyens de routage, **caractérisé en ce que** lesdits moyens de communication sans fil et de routage sont aptes à établir le réseau sans fil principal et un réseau sans fil alternatif, le boitier étant configuré pour, lorsqu'il est connecté à l'Internet et lorsque l'équipement est connecté au boitier via le réseau alternatif, n'autoriser que le trafic entrant/sortant nécessaire au téléchargement sur l'équipement d'un logiciel de configuration,
le procédé comprenant les étapes de :
- Activation du réseau sans fil alternatif,
- Connexion de l'équipement au boitier via ledit réseau sans fil alternatif,
- Téléchargement dudit logiciel de configuration et installation sur l'équipement,
- Configuration de l'équipement pour la connexion au réseau sans fil principal par le logiciel de configuration.

Selon d'autres caractéristiques avantageuses et non limitatives :
- le logiciel de configuration est mis à disposition dans une mémoire du boitier d'accès à Internet, le boitier étant configuré pour, lorsqu'il est connecté à l'Internet et lorsque l'équipement est connecté au boitier via le réseau alternatif :
   - bloquer tout trafic sortant émis depuis l'équipement,
   - bloquer tout trafic entrant à destination de l'équipement ;
   le logiciel de configuration étant téléchargé depuis le boitier.
- le boitier est configuré pour, lorsqu'il est connecté à l'Internet et lorsque l'équipement est connecté au boitier via le réseau alternatif :
   - bloquer tout trafic sortant émis depuis l'équipement et n'étant pas à destination d'un serveur habilité sur lequel est mis à disposition ledit logiciel de configuration,
   - bloquer tout trafic entrant à destination de l'équipement ne provenant pas du serveur habilité ;
   le logiciel de configuration étant téléchargé depuis le serveur habilité.
- un portail d'administration est hébergé sur le boitier, le portail proposant des liens vers ledit logiciel de configuration sur le serveur habilité, le trafic sortant bloqué par le boitier car émis depuis l'équipement et n'étant pas à destination du serveur habilité étant redirigé vers ledit portail d'administration ;
- l'étape de configuration de l'équipement pour la connexion au réseau sans fil principal comprend le transfert préalable d'une clé de sécurité du réseau sans fil principal depuis le boitier vers le logiciel de configuration de l'équipement via le réseau sans fil alternatif ;
- l'étape de configuration de l'équipement pour la connexion au réseau sans fil principal comprend en outre des étapes de :
   - Envoi par le logiciel de configuration au boitier d'une requête de transfert de la clé de sécurité,
   - Déclenchement par le boitier d'accès à Internet d'un signal visuel et/ou sonore signalant la réception par le boitier d'une requête de transfert de la clé de sécurité ;
   le transfert de la clé de sécurité via le réseau sans fil alternatif n'étant mis en oeuvre que si un utilisateur effectue une action prédéterminée en réponse audit signal visuel et/ou sonore.
- le boitier d'accès à Internet est en communication avec un téléviseur, la réception par le boitier d'une requête de transfert de la clé de sécurité étant signalée par l'affichage d'un contenu sur le téléviseur, et l'action prédéterminée pour la mise en oeuvre du transfert de la clé de sécurité via le réseau sans fil alternatif étant réalisée via des moyens de contrôle du téléviseur tels qu'une télécommande ;
- le signal visuel et/ou sonore signalant la réception par le boitier d'une requête de transfert de la clé de sécurité comprend des informations permettant d'identifier l'équipement à partir duquel a été émise ladite requête de transfert de la clé de sécurité ;
- le réseau sans fil alternatif est un réseau public non sécurisé n'acceptant qu'un nombre limité de communications à la fois ;
- l'étape d'activation du réseau sans fil alternatif est déclenchée en appuyant sur un bouton du boitier ou par activation logicielle ;
- le procédé comprend en outre une surveillance du trafic sur le réseau sans fil alternatif une fois qu'il a été activé, une étape de désactivation du réseau sans fil alternatif étant mise en oeuvre en cas d'inactivité prolongée.
- la surveillance du trafic comprend des étapes de :
   (a) premier décompte temporel
   (b) mesure du volume de données transférées sur le réseau sans fil alternatif ;
   (c) deuxième décompte temporel ;
   (d) mesure du volume de données transférées sur le réseau sans fil alternatif et comparaison avec la mesure précédente :
      - si le volume a augmenté, répétition des étapes (c) et (d) ;
      - sinon, désactivation du réseau sans fil alternatif.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture de réseau pour la mise en oeuvre du procédé selon l'invention ;
- la figure 2 est un schéma d'une architecture de réseau pour la mise en oeuvre d'un mode de réalisation préféré du procédé selon l'invention ;
- la figure 3 est un diagramme représentant des étapes d'un mode de réalisation du procédé selon l'invention.

### DESCRIPTION DETAILLEE

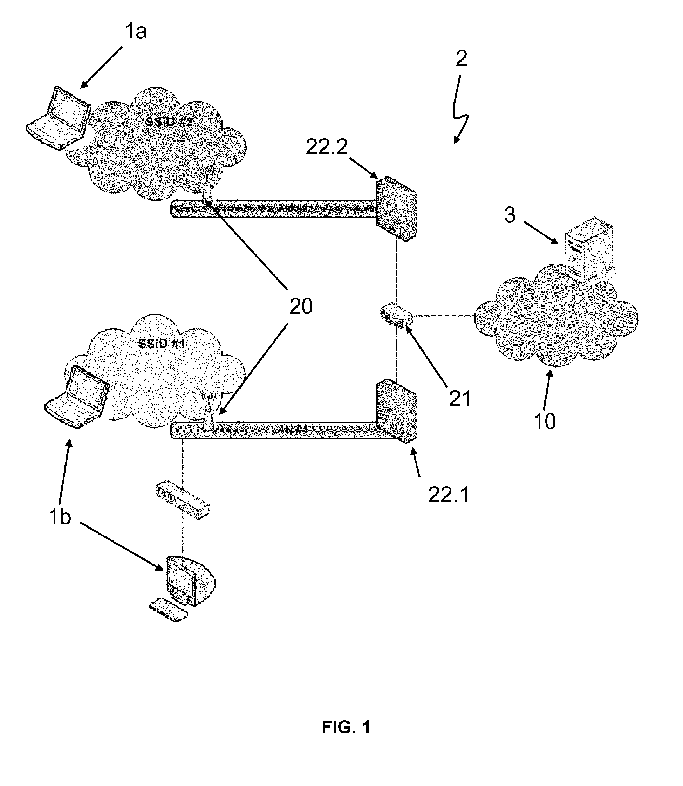

En référence aux dessins et en particulier à la figure 1, le procédé selon l'invention est basé sur un boitier d'accès à Internet 2 comprenant des moyens de communication sans fil 20 avec au moins un équipement 1 et des moyens de routage 21. Les moyens 20, 21 sont aptes à établir un réseau sans fil principal LAN#1 et un réseau sans fil alternatif LAN#2 (LAN signifiant Local Access Network, c'est-à-dire réseau local). Dans la suite de la présente description, on prendra pour exemple des réseaux Wi-Fi (c'est-à-dire suivant la norme IEEE 802.11), mais on comprendra que l'invention s'applique à toute technologie sans fil. On citera notamment d'autres technologies par ondes radio telles que WiMax, le Bluetooth, la 3G, etc. Le réseau sans fil principal LAN#1 est un réseau sécurisé, c'est-à-dire qu'il est nécessaire de saisir une clé de sécurité comme expliqué précédemment. Dans le cas d'un réseau Wi-Fi, la sécurisation sera mise en oeuvre en mettant l'un des quelconques mécanismes connus de l'homme du métier, mécanismes tels que WEP, WPA, WPA2, etc.

Le boitier 2 est représenté connecté au réseau Internet 10. Cette connexion est par exemple mise en oeuvre via l'xDSL, la fibre optique (FTTH) ou encore le câble (FTTLA). Un serveur 3, qui sera décrit plus bas et qui intervient dans un mode de réalisation de l'invention, est lui-même connecté à l'Internet 10.

Il est important de préciser qu'il peut y avoir unicité des moyens de communication sans fil 20, et pas forcément une coupure en deux sous-systèmes comme l'on voit sur la figure 1. En d'autres termes, il est tout à fait possible d'avoir une antenne unique pour l'émission/réception sur les réseaux LAN#1 et LAN#2. Dans ce cas, les mêmes moyens de communications sans fil gèrent simultanément les deux réseaux LAN#1 et LAN#2 soit en utilisant deux canaux Wi-Fi (bandes de fréquence de largeur 22MHz) distincts, soit en partageant la bande-passante avec un tri des paquets par les moyens de routage 21. L'homme du métier se réfèrera à ce propos par exemple à la demande de brevet WO 2006/076626 dans laquelle il trouvera davantage d'informations sur les doubles réseaux sans fil.

Les deux réseaux sans fil LAN#1 et LAN#2 sont deux réseaux distincts possédant chacun un SSiD (Service Set Identifier), c'est-à-dire un nom identifiant le réseau, spécifique (ici SSiD#1 et SSiD#2).

Sur la figure 1, on a représenté une pluralité d'équipements 1a, 1b, les équipements 1a étant des équipements connectés au réseau principal LAN#1, et les équipements 1b étant des équipements connectés au réseau alternatif LAN#2. Le ou les équipements 1a, 1b peuvent être tout dispositif électronique comportant des moyens de communication sans fil compatibles avec les moyens 20 du boitier. On citera en particulier les ordinateurs fixes ou portables. On comprendra que l'invention s'applique également dans une certaine mesure à des smartphones, des tablettes, des périphériques tels des imprimantes ou des télévisions, etc.

### Réseau Alternatif

Comme l'on voit sur la figure 1, le boitier 2 met en oeuvre une politique de segmentation de deux réseaux LAN#1 et LAN#2 via deux firewalls (en français pare-feu) 22.1, 22.2 dédiés.

Le boitier 2 (et en particulier le firewall 22.2 du réseau alternatif LAN#2) est ainsi configuré pour, lorsqu'il est connecté à l'Internet 10 et lorsque l'équipement 1a est connecté au boitier 2 via le réseau alternatif LAN#2, n'autoriser que le trafic entrant/sortant nécessaire au téléchargement sur l'équipement 1a d'un logiciel de configuration.

Par trafic entrant, on entend les données provenant d'Internet 10 qui traversent le boitier 2 pour entrer sur le réseau local dont il est le routeur, et par trafic sortant on entend les données provenant de ce réseau local traversant le boitier 2 à destination d'un équipement situé sur l'Internet 10.

Selon la localisation dudit logiciel de configuration (qui sera décrit en détail plus loin), cet aspect de l'invention se traduit de différentes façons.

Soit ledit logiciel est hébergé hors du réseau local, c'est-à-dire quelque part dans l'Internet 10, et alors le boitier 2 est avantageusement configuré pour, lorsqu'il est connecté à l'Internet 10 et lorsque l'équipement 1a est connecté au boitier 2 via le réseau alternatif LAN#2 :
- bloquer tout trafic sortant émis depuis l'équipement 1a et n'étant pas à destination d'un serveur habilité3 sur lequel est mis à disposition un logiciel de configuration;
- bloquer tout trafic entrant à destination de l'équipement 1a ne provenant pas du serveur habilité 3.

Le serveur 3 est alors par exemple un serveur Web classique comprenant un ou plusieurs processeurs et des moyens de stockage de données, et connecté à l'Internet 10.

Soit le logiciel de configuration est mis à disposition dans une mémoire, telle un disque dur, du boitier d'accès à Internet 2 (en d'autres termes, le boitier 2 est fourni à l'utilisateur avec le logiciel préchargé), le boitier 2 étant configuré alors pour, lorsqu'il est connecté à l'Internet 10 et lorsque l'équipement 1a est connecté au boitier 2 via le réseau alternatif (LAN#2) :
- bloquer tout trafic sortant émis depuis l'équipement (1a),
- bloquer tout trafic entrant à destination de l'équipement (1a).

Il est par ailleurs possible dans ce dernier cas d'accéder au logiciel quand bien même le boitier 2 n'est pas encore relié à Internet 30.

Dans un cas comme dans l'autre, le firewall 22.2 du réseau alternatif LAN#2 est avantageusement configuré de manière définitive et permanente de sorte que la modification de ces règles de filtrage ne soit pas possible, sauf éventuellement par le fournisseur d'accès.

L'invention n'est en revanche limitée à aucune politique en ce qui concerne le firewall 22.1 du réseau principal LAN#1. Ce firewall 22.1 peut être par exemple initialement non restrictif (pas de trafic entrant/sortant bloqué) puis manuellement configuré par l'utilisateur du boitier 2 en fonction de la politique de sécurité Internet qu'il souhaite.

Le principe de l'invention est d'utiliser le réseau alternatif LAN#2 moyen de récupération du logiciel de configuration, puis comme canal de communication entre ce logiciel de configuration et le boitier d'accès à Internet 2 pour la transmission de la clé de sécurité nécessaire à la connexion au réseau sans fil principal LAN#1.

En effet, les règles de filtrage précédemment décrites font qu'un équipement connecté au boitier 2 via le réseau alternatif LAN#2 peut au mieux accéder au seul serveur habilité 3 le cas échéant (on comprendra que l'invention s'applique également au cas où il y a plusieurs serveurs habilités 3 entre lesquels différents logiciels sont proposés), et est « cloisonné » du reste d'Internet 10. Cela interdit une utilisation détournée du réseau alternatif LAN#2, seul le réseau principal LAN#1 offre un accès aux contenus d'Internet.

Si le serveur habilité 3 est un serveur du fournisseur d'accès à Internet, alors se connecter au réseau alternatif LAN#2 peut être considéré comme étant exactement équivalent à récupérer le logiciel depuis la clé de sécurité via un CD ou une clé USB, sans les désavantages d'un support matériel.

Dans le cas où le logiciel est déjà hébergé par le boitier 2, tout accès à Internet 10 via le réseau alternatif LAN#2 est purement et simplement impossible.

Le blocage du trafic entrant/sortant prévient tout risque d'intrusion ou de fuite de la clé de sécurité et garantit par conséquent la sécurité du réseau sans fil principal LAN#1 : la clé de sécurité circule dans un espace clos dont les seuls éléments sont l'équipement 1a et le boitier 2, plus éventuellement le serveur 3, qui est a priori un serveur du fournisseur d'accès. Les règles susmentionnées servent donc de « sas » de protection aux données, toute intrusion étant automatiquement bloquée (car n'étant pas issue du serveur habilité 3).

En parallèle du réseau alternatif LAN#2, le réseau principal LAN#1 fournit comme expliqué un accès ordinaire à l'Internet 10 si la clé de sécurité du réseau est renseignée. Il est tout à fait possible d'avoir un fonctionnement simultané des deux réseaux LAN#1 et LAN#2, une pluralité d'équipements étant chacun connecté à l'un ou l'autre de ces réseaux. Dans ce dernier cas, on peut prévoir que le débit sur le réseau alternatif LAN#2 soit bridé pour éviter tout engorgement sur le réseau principal LAN#1.

Le réseau sans fil alternatif LAN#2 est avantageusement un réseau Wi-Fi public non sécurisé n'acceptant qu'une seule communication à la fois. Ce dernier est alors accessible immédiatement par n'importe quel équipement dès lors que le boitier 2 est allumé. Un nombre limité de communications, voire une seule communication, sont avantageusement acceptées à la fois pour ajouter une protection supplémentaire contre les abus. Cette fonctionnalité peut être configurable par un administrateur ou le fournisseur d'accès.

Comme on verra plus loin, d'autres mécanismes additionnels permettent un fonctionnement limité temporellement et/ou des mécanismes d'authentification forte de l'utilisateur pour davantage de sécurité.

### Portail d'administration

Pour plus d'ergonomie, dans le cas où le logiciel de configuration est hébergé extérieurement au boitier 2, un portail d'administration est avantageusement hébergé sur le boitier 2 (par exemple sous la forme d'un serveur HTTP), le portail proposant des liens vers les contenus hébergés sur le serveur habilité 3. Le firewall 22.2 du réseau alternatif LAN#2 est alors configuré de façon particulièrement préférée de sorte que le trafic sortant bloqué par le boitier 2 (c'est-à-dire le trafic émis depuis l'équipement 1a et n'étant pas à destination du serveur habilité 3) soit redirigé vers ledit portail d'administration.

Ainsi, une fois que l'équipement 1a est connecté sur le réseau alternatif LAN#2, l'ouverture d'un navigateur Internet par l'utilisateur de l'équipement 1a lance une requête d'accès à une page d'accueil du navigateur (par exemple un moteur de recherche), requête interceptée (car il s'agit de trafic sortant non à destination du serveur habilité 3), et redirigée par le portail d'administration. Ce dernier propose alors un affichage qui invite l'utilisateur à accéder au logiciel de configuration en cliquant sur une liste de liens vers les contenus hébergés sur le serveur habilité 3.

Il est important de comprendre que la solution proposée par l'invention ne doit pas être confondue avec les techniques de « walled garden » souvent mises en oeuvre par exemple dans des hôtels, qui consistent à initialement rediriger tout le trafic vers un portail d'authentification, sur lequel l'utilisateur doit entrer un couple login/password le plus souvent fourni par la réception de l'hôtel à ses clients pour pouvoir accéder à l'Internet 10.

Il n'y a en effet dans de telles architectures qu'un seul réseau sans fil, ce dernier ayant des règles de firewall variables (restriction totale avant authentification, liberté ensuite). Au sein du même réseau, certains utilisateurs peuvent donc avoir un accès libre, et d'autres un accès restreint : ces derniers ont donc un contact indirect avec Internet, il n'y a pas « cloisonnement », et par conséquent une sécurité insuffisante.

### Procédé d'auto-configuration

L'invention concerne comme expliqué précédemment en particulier un procédé de configuration d'un équipement 1a pour la connexion à un réseau sans fil principal sécurisé LAN#1 via un boitier d'accès à Internet 2 tel que décrit précédemment.

Le procédé comprend les étapes de :
- Activation du réseau sans fil alternatif LAN#2,
- Connexion de l'équipement 1a au boitier 2 via ledit réseau sans fil alternatif LAN#2,
- Téléchargement dudit logiciel de configuration (depuis l'équipement adéquat, à savoir soit le boitier 2, soit le serveur habilité 3), et installation sur l'équipement 1a,
- Configuration de l'équipement 1a pour la connexion au réseau sans fil principal LAN#1 par le logiciel de configuration.

L'étape de configuration de l'équipement 1a pour la connexion au réseau sans fil principal LAN#1 comprend avantageusement le transfert préalable d'une clé de sécurité du réseau sans fil principal LAN#1 depuis le boitier 2 vers le logiciel de configuration de l'équipement 1a via le réseau sans fil alternatif LAN#2.

Le logiciel de configuration est en effet avant tout un logiciel apte à établir un canal de communication avec le boitier 2, en particulier chiffré, de façon à permettre en toute sécurité le transfert de la clé de sécurité depuis le boitier 2 vers l'équipement 1a sur lequel le logiciel est exécuté. Sachant que le réseau alternatif LAN#2 est un réseau fermé, la sécurité est d'autant plus garantie.

Une fois la clé reçue, le logiciel est avantageusement capable de renseigner automatiquement la clé dans les préférences réseau de l'équipement 1a. Ainsi, la clé est enregistrée pour toute connexion ultérieure au réseau principal LAN#1, l'équipement est en d'autres termes configuré.

### Activation et authentification forte

Pour diminuer l'exposition du réseau alternatif LAN#2 et diminuer les chances qu'un équipement non souhaité qui soit à portée s'y connecte (ce réseau pouvant en effet être un réseau public comme vu précédemment), il est en effet souhaitable que le réseau LAN#2 soit actif le moins longtemps possible.

L'étape d'activation du réseau sans fil alternatif LAN#2 est ainsi avantageusement déclenchée par l'utilisateur en appuyant sur un bouton de son boitier 2. Il n'y a alors quasiment aucune chance qu'un tiers ait le temps de s'apercevoir de l'apparition du réseau et de s'y connecter avant l'utilisateur qui a appuyé sur le bouton.

Alternativement, l'activation peut être déclenchée de façon logicielle, par exemple via le portail d'administration du boitier 2 (lequel est accessible via un autre équipement 1 autorisé déjà connecté en particulier via le réseau principal LAN#1).

De façon particulièrement préférée, le procédé selon l'invention peut mettre en outre en oeuvre une vérification de l'utilisateur, que l'on pourrait qualifier d'authentification forte.

En effet, il y a toujours un risque, certes minime, qu'un tiers qui cherche volontairement à usurper l'identité de l'utilisateur du boitier 2 arrive à se connecter au réseau alternatif LAN#2 en étant à proximité au bon moment. Cette faille permettrait théoriquement à ce tiers de télécharger le logiciel de configuration, d'établir le canal de communication, et de récupérer la clé de sécurité depuis le boitier 2 pensant avoir à faire à un équipement 1a autorisé par l'utilisateur du boitier 2.

L'authentification forte combine une protection par clé de sécurité et une confirmation via une entité physique que seul l'utilisateur autorisé peut contrôler.

En d'autres termes, l'étape de configuration de l'équipement 1a pour la connexion au réseau sans fil principal LAN#1 comprend en outre avantageusement des étapes de :
- Envoi par le logiciel de configuration au boitier 2 d'une requête de transfert de la clé de sécurité,
- Déclenchement par le boitier d'accès à Internet d'un signal visuel et/ou sonore signalant la réception par le boitier 2 d'une requête de transfert de la clé de sécurité ;
le transfert de la clé de sécurité via le réseau sans fil alternatif LAN#2 n'étant mis en oeuvre que si un utilisateur effectue une action prédéterminée en réponse audit signal visuel et/ou sonore.

En d'autres termes, le téléchargement du logiciel de configuration n'est pas contrôlé (il peut le plus souvent être téléchargé gratuitement sur Internet depuis n'importe quel ordinateur), mais l'étape fondamentale du procédé de configuration, à savoir le transfert de la clé de sécurité, est subordonnée à un consentement « matériel » de l'utilisateur.

Par déclenchement d'un signal visuel et/ou sonore par le boitier 2, on entend que soit c'est le boitier 2 lui-même qui émet le signal (les boitiers d'accès à Internet 2 ont souvent un bipeur qui leur permet d'émettre un son d'alerte, voire des moyens d'affichage par exemple à segments), soit un équipement relié et commandable par le boitier 2 comme l'on verra plus loin. Le signal visuel et/ou sonore peut être quelconque. Il suffit qu'il ait une intensité suffisante pour avertir à coup sûr l'utilisateur que quelqu'un est en train de demander la clé de sécurité de son réseau sans fil LAN#1.

Si l'utilisateur est effectivement en train d'utiliser un équipement 1a pour lequel il souhaite l'auto-configuration, l'émission du signal indique que la procédure se déroule de façon normale. Si le signal est émis de façon inattendue, c'est qu'une personne non autorisée est peut-être en train de tenter de pénétrer son réseau, c'est pourquoi il est invité à stopper toute procédure et à laisser couper le réseau alternatif LAN#2 se désactiver. On prévoit en effet avantageusement un délai (par exemple 1 min) avant la fin duquel l'action prédéterminée que l'utilisateur doit effectuer pour autoriser le transfert de la clé de sécurité, sous peine de blocage du réseau alternatif LAN#2.

Cette action peut être n'importe quelle action matérielle (c'est-à-dire qui implique une manipulation physique) qui ne peut pas être faite sans faire exprès ou à distance, et qui par conséquent prouve le consentement de l'utilisateur. Ce peut être par exemple un appui sur un bouton du boitier 2 (par exemple le même que celui pour l'activation).

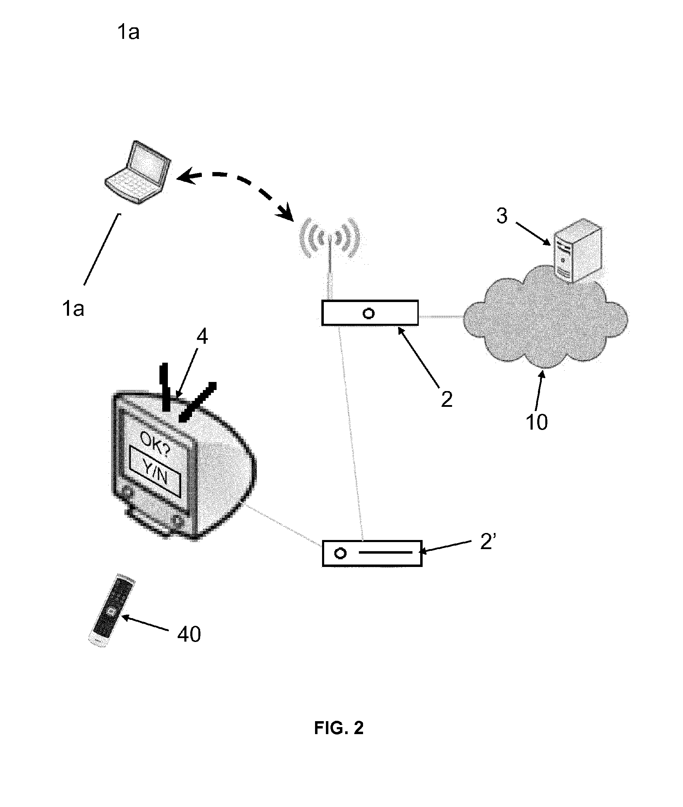

De façon particulièrement préférée, le procédé utilise un téléviseur de l'utilisateur. En effet, les boitiers d'accès Internet 2 sont de nos jours le plus souvent fournis avec un boitier satellite (« set-top box », ou « boitier multimédia ») permettant de fournir les chaînes de télévision dans le cadre des offres « triple-play ». Dans ce cas, l'écran d'une télévision 4 reliée à un boitier multimédia 2' (voir figure 2) lui-même relié au boitier d'accès à Internet 2 peut être le moyen d'émission du signal visuel et/ou sonore.

Ainsi, le boitier d'accès à Internet 2 est en communication avec un téléviseur 4, la réception par le boitier 2 d'une requête de transfert de la clé de sécurité étant signalée par l'affichage d'un contenu sur le téléviseur, et l'action prédéterminée pour la mise en oeuvre du transfert de la clé de sécurité via le réseau sans fil alternatif LAN#2 étant réalisée via des moyens de contrôle du téléviseur 4 tels qu'une télécommande 40.

De façon encore plus avantageuse le signal visuel et/ou sonore signalant la réception par le boitier 2 d'une requête de transfert de la clé de sécurité comprend des informations permettant d'identifier l'équipement 1a à partir duquel a été émise ladite requête de transfert de la clé de sécurité, informations tel le nom de l'équipement 1a, son adresse MAC, etc. Ces informations peuvent s'afficher sur l'écran de la télévision 4. A titre d'exemple le message « Voulez-vous autoriser l'ordinateur [nom de l'ordinateur] d'adresse MAC [MAC] à disposer des informations permettant la connexion au réseau sans fil [SSID du réseau LAN#1] ? OUI - NON ». Avec les touches de sa télécommande 40, l'utilisateur doit par exemple déplacer un curseur OUI, puis appuyer sur une touche d'entrée.

Il est à noter qu'une liste noire et/ou une liste blanche (« Blacklist/Whitelist ») d'équipements 1 est avantageusement présente sur le boitier 2. Un équipement est par exemple identifié dans l'une de ces listes par son adresse MAC et/ou son nom. L'idée est d'enregistrer automatiquement dans l'une de ces listes tout équipement 1a pour lequel une requête de transfert de la clé de sécurité est présentée à l'utilisateur, en fonction de la réponse : si celle-ci est OUI (l'utilisateur confirme qu'il s'agit d'un équipement dont l'accès est désiré) l'équipement est mis en liste blanche, et si la réponse est NON (l'utilisateur signale qu'il s'agit d'un équipement inconnu qui cherche potentiellement à obtenir frauduleusement la clé de sécurité du réseau LAN#1 de l'utilisateur) l'équipement est mis en liste noire. Il est également éventuellement possible de modifier manuellement les contenus des listes ou de supprimer le mécanisme de liste blanche/noire via le portail d'administration du boitier d'accès à Internet 2.

Toute requête ultérieure de transfert de clé de sécurité se verra automatiquement acceptée pour un équipement en liste blanche, et automatiquement refusée pour un équipement en liste noire (sans signal sonore/visuel).

### Surveillance du trafic

Il est en outre souhaitable que l'accès au réseau alternatif LAN#2 soit temporaire, et plus particulièrement se coupe rapidement, soit quand l'utilisateur ne l'utilise plus, soit dès qu'il a fini le transfert de clé. Il est ainsi prévu de façon particulièrement préférée une surveillance du trafic (« monitoring ») sur ce réseau une fois qu'il a été activé, une étape de désactivation du réseau sans fil alternatif LAN#2 étant mise en oeuvre en cas d'inactivité prolongée.

La surveillance du trafic comprend avantageusement des étapes de :
(a) premier décompte temporel
(b) mesure du volume de données transférées sur le réseau sans fil alternatif LAN#2 ;
(c) deuxième décompte temporel ;
(d) mesure du volume de données (en provenance du boitier 2) transférées sur le réseau sans fil alternatif LAN#2 et comparaison avec la mesure précédente :
   - si le volume a augmenté, répétition des étapes (c) et (d) ;
   - sinon, désactivation du réseau sans fil alternatif LAN#2.

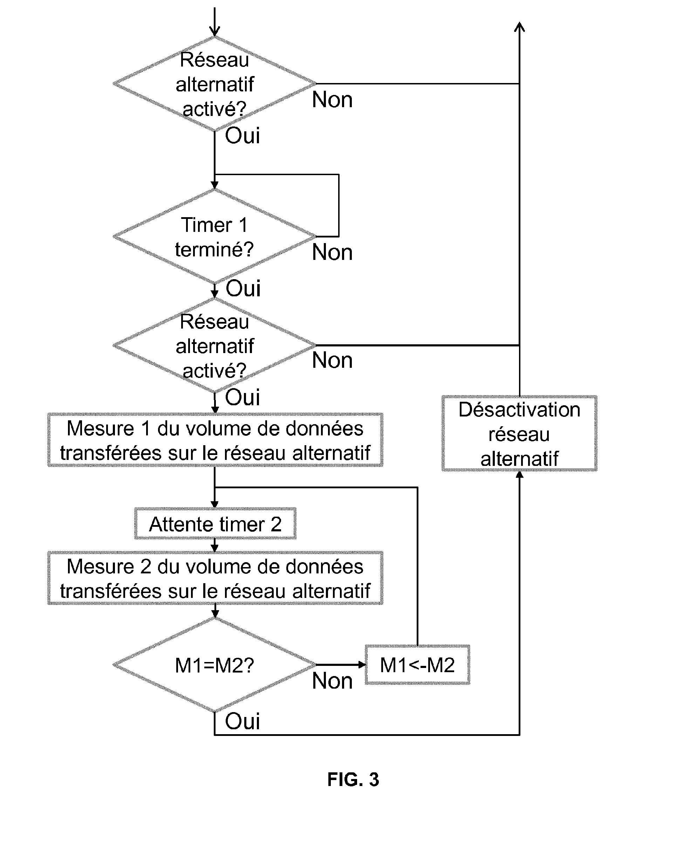

Un mode de réalisation particulièrement préféré de cette surveillance est représenté sur la figure 3.

Comme on le voit, on commence par vérifier que le réseau alternatif LAN#2 est bien actif, et que le monitoring n'a pas été demandé par erreur.

Le cas échéant, on lance le premier décompte temporel (Timer 1), par exemple de 90s. Ce timer permet de désactiver rapidement le réseau alternatif LAN#2 dans le cas où en réalité l'utilisateur n'avait pas l'intention de se connecter (appui par erreur sur le bouton par exemple). Il est toutefois choisi suffisamment long pour que l'utilisateur connecté à bon escient ait le temps d'être redirigé sur le portail d'administration, et peut prendre en compte le temps d'activation du réseau alternatif LAN#2 et le délai d'affichage et de détection par l'équipement 1, lesquels sont variables.

Une première mesure (M1) du volume de données transférées sur le réseau sans fil alternatif LAN#2 est effectuée. Par volume de données transférées sur le réseau alternatif LAN#2, on entend par exemple le nombre de paquets ou de bits entrés/sortis sur l'interface SSiD#2.

Un deuxième décompte temporel (Timer 2) est lancé, par exemple 45s. Le Timer 2 correspond à l'intervalle temporel entre deux mesures successives du volume de données transférées sur le réseau sans fil alternatif LAN#2. Au bout du temps Timer 1 + Timer 2 (dans l'exemple 2 min 15s) on peut considérer que l'utilisateur a eu le temps d'effectuer des actions qui ne génèrent pas de trafic comme la lecture du portail d'administration et l'identification du logiciel de configuration à récupérer : le téléchargement a commencé et le nombre de paquets échangés augmente. On effectue comme expliqué une nouvelle mesure (M2) afin de le savoir, M2 correspondant à M1 incrémenté du volume de données échangées pendant le Timer 2.

Une comparaison des volumes de données mesurées avant et après le Timer 2 (M1 et M2) est alors effectuée. Si le nombre n'a pas changé (en d'autres termes l'incrément est nul), c'est que l'utilisateur n'a lancé aucun téléchargement, et comme expliqué on considère que cela signifie que le réseau est inactif. On désactive alors le réseau alternatif LAN#2. Au contraire, si M2>M1 (en d'autres termes l'incrément est non nul), c'est que l'utilisateur est en train de télécharger ou de procéder au transfert de clé qui suit et on relance un Timer 2. On affecte la valeur de M2 à M1 (la valeur finale devient la nouvelle valeur initiale pour la comparaison), et on réalise une nouvelle mesure de M2, à nouveau comparée avec M1 à la fin du Timer 2.

On continue itérativement cette boucle jusqu'à ce que le volume de données échangées n'augmente plus (condition M1=M2 vérifiée). Cela signifie que le procédé est terminé, le réseau alternatif LAN#2 est par conséquent désactivé. Il est à noter qu'on peut prévoir un nombre maximal de boucles afin de prévenir les abus. Pour ce faire, le nombre d'incrémentations de M2 est enregistré, et dès qu'on atteint une valeur seuil le réseau alternatif LAN#2 est désactive sans qu'un nouveau Timer 2 ne soit relancé.

L'homme du métier comprendra que l'algorithme donné ci-dessus, et en particulier les durées des décomptes temporels, est donné à titre purement illustratif. De nombreuses alternatives sont possibles.

On pourra éventuellement inclure dans le cas de l'émission d'un signal visuel et/ou sonore à l'adresse de l'utilisateur le délai (un Timer 3) précédemment mentionné, avant la fin duquel l'utilisateur doit voir effectuer une action prédéterminée sous peine de désactivation immédiate du réseau alternatif LAN#2.

## Revendications

1. Procédé de configuration d'un équipement (1a) pour la connexion à un réseau sans fil principal sécurisé (LAN#1), un boitier d'accès à Internet (2) comprenant des moyens de communication sans fil (20) avec l'équipement (1a) au moins et des moyens de routage (21), **caractérisé en ce que** lesdits moyens de communication sans fil et de routage (20, 21) sont aptes à établir le réseau sans fil principal (LAN#1) et un réseau sans fil alternatif (LAN#2), le boitier (2) étant configuré pour, lorsqu'il est connecté à l'Internet (10) et lorsque l'équipement (1a) est connecté au boitier (2) via le réseau alternatif (LAN#2), n'autoriser que le trafic entrant/sortant nécessaire au téléchargement sur l'équipement (1a) d'un logiciel de configuration,
le procédé comprenant les étapes de :
- Activation du réseau sans fil alternatif (LAN#2),
- Connexion de l'équipement (1a) au boitier (2) via ledit réseau sans fil alternatif (LAN#2),
- Téléchargement dudit logiciel de configuration et installation sur l'équipement (1a),
- Configuration de l'équipement (1a) pour la connexion au réseau sans fil principal (LAN#1) par le logiciel de configuration.

2. Procédé selon la revendication 1, dans lequel le logiciel de configuration est mis à disposition dans une mémoire du boitier d'accès à Internet (2), le boitier (2) étant configuré pour, lorsqu'il est connecté à l'Internet (10) et lorsque l'équipement (1a) est connecté au boitier (2) via le réseau alternatif (LAN#2) :
- bloquer tout trafic sortant émis depuis l'équipement (1a),
- bloquer tout trafic entrant à destination de l'équipement (1 a) ;
le logiciel de configuration étant téléchargé depuis le boitier (2).

3. Procédé selon la revendication 1, dans lequel le boitier (2) est configuré pour, lorsqu'il est connecté à l'Internet (10) et lorsque l'équipement (1a) est connecté au boitier (2) via le réseau alternatif (LAN#2) :
- bloquer tout trafic sortant émis depuis l'équipement (1a) et n'étant pas à destination d'un serveur habilité (3) sur lequel est mis à disposition ledit logiciel de configuration,
- bloquer tout trafic entrant à destination de l'équipement (1 a) ne provenant pas du serveur habilité (3) ;
le logiciel de configuration étant téléchargé depuis le serveur habilité (3).

4. Procédé selon la revendication 3, dans lequel un portail d'administration est hébergé sur le serveur (3), le portail proposant des liens vers ledit logiciel de configuration sur le serveur habilité (3), le trafic sortant bloqué par le boitier (2) car émis depuis l'équipement (1a) et n'étant pas à destination du serveur habilité (3) étant redirigé vers ledit portail d'administration.

5. Procédé selon l'une des revendications1 à 4, dans lequel l'étape de configuration de l'équipement (1a) pour la connexion au réseau sans fil principal (LAN#1) comprend le transfert préalable d'une clé de sécurité du réseau sans fil principal (LAN#1) depuis le boitier (2) vers le logiciel de configuration de l'équipement (1a) via le réseau sans fil alternatif (LAN#2).

6. Procédé selon la revendication 5, dans lequel l'étape de configuration de l'équipement (1a) pour la connexion au réseau sans fil principal (LAN#1) comprend en outre des étapes de :
- Envoi par le logiciel de configuration au boitier (2) d'une requête de transfert de la clé de sécurité,
- Déclenchement par le boitier d'accès à Internet d'un signal visuel et/ou sonore signalant la réception par le boitier (2) d'une requête de transfert de la clé de sécurité ;
le transfert de la clé de sécurité via le réseau sans fil alternatif (LAN#2) n'étant mis en oeuvre que si un utilisateur effectue une action prédéterminée en réponse audit signal visuel et/ou sonore.

7. Procédé selon la revendication 6, dans lequel le boitier d'accès à Internet (2) est en communication avec un téléviseur (4), la réception par le boitier (2) d'une requête de transfert de la clé de sécurité étant signalée par l'affichage d'un contenu sur le téléviseur, et l'action prédéterminée pour la mise en oeuvre du transfert de la clé de sécurité via le réseau sans fil alternatif (LAN#2) étant réalisée via des moyens de contrôle du téléviseur (4) tels qu'une télécommande.

8. Procédé selon l'une des revendications 6 ou 7, dans lequel le signal visuel et/ou sonore signalant la réception par le boitier (2) d'une requête de transfert de la clé de sécurité comprend des informations permettant d'identifier l'équipement (1a) à partir duquel a été émise ladite requête de transfert de la clé de sécurité.

9. Procédé selon l'une des revendications 1 à 8, dans lequel le réseau sans fil alternatif (LAN#2) est un réseau public non sécurisé n'acceptant qu'un nombre limité de communications à la fois.

10. Procédé selon l'une des revendications 1 à 9, dans lequel l'étape d'activation du réseau sans fil alternatif (LAN#2) est déclenchée en appuyant sur un bouton du boitier (2) ou par activation logicielle.

11. Procédé selon l'une des revendications 1 à 10, comprenant en outre une surveillance du trafic sur le réseau sans fil alternatif (LAN#2) une fois qu'il a été activé, une étape de désactivation du réseau sans fil alternatif (LAN#2) étant mise en oeuvre en cas d'inactivité prolongée.

12. Procédé selon la revendication 11, dans lequel la surveillance du trafic comprend des étapes de :
(a) premier décompte temporel
(b) mesure du volume de données transférées sur le réseau sans fil alternatif (LAN#2) ;
(c) deuxième décompte temporel ;
(d) mesure du volume de données transférées sur le réseau sans fil alternatif (LAN#2) et comparaison avec la mesure précédente :
- si le volume a augmenté, répétition des étapes (c) et (d) ;
- sinon, désactivation du réseau sans fil alternatif (LAN#2).
